# EUROPEAN PATENT SPECIFICATION

(11) **EP 4 393 724 B1**
(45) Date of publication and mention of the grant of the patent: **25.06.2025**
(21) Application number: 23209292.4
(22) Date of filing: 13.11.2023
(51) Int. Cl.: B60C 11/02, B60C 11/13, B60C 11/01

(54) **RETREADED TIRE**
RUNDERNEUERTER REIFEN
PNEU RECHAPÉ

(30) Priority: 27.12.2022 JP 2022209934
(43) Date of publication of application: 03.07.2024
(73) Proprietor: Sumitomo Rubber Industries, Ltd., Kobe-shi, Hyogo-ken 651-0072 (JP)
(72) Inventor: TANIGUCHI, Hidetoshi, Kobe-shi, 651-0072 (JP)
(74) Representative: Manitz Finsterwald Patent- und Rechtsanwaltspartnerschaft mbB

(56) References cited:
- WO-A1-2014/145894
- JP-A- 2009 298 184
- JP-A- 2014 019 308
- JP-A- 2014 076 765
- JP-A- 2014 213 731
- JP-A- H0 717 217
- US-A1- 2014 158 262
- US-A1- 2017 072 749

## Description

### RELATED APPLICATIONS

This application claims the benefit of foreign priority to Japanese Patent Application No. JP2022-209934, filed December 27, 2022.

### FIELD OF THE INVENTION

The present invention relates to a retreaded tire.

### BACKGROUND OF THE INVENITON

Japanese Unexamined Patent Application Publication No. 2011-235783 has proposed a retreaded tire formed of a base tire, which is a used tire from which a tread rubber is removed, and a new tread rubber (tread rubber for retread, retreaded tread rubber) attached to the base tire. Related technology is known from WO 2014/145894 A1.

### SUMMARY OF THE INVENTION

It is possible that damages such as a tread rubber peeling off from a base tire may occur to a retreaded tire during running.

The present invention was made in view of the above, and a primary object thereof is to provide a retreaded tire with improved peeling resistance of the tread rubber to peeling off from the base tire. The present invention is set out in the appended claims.

A retreaded tire according to claim 1 includes a base tire and a tread rubber for retread adhered to the base tire, wherein the tread rubber includes a first tread edge and a first shoulder circumferential groove adjacent to the first tread edge and extending continuously in a tire circumferential direction, and the first shoulder circumferential groove has a groove surface provided with a plurality of dimples.

By adopting the above configuration, the retreaded tire of the present invention can improve the peeling resistance of the tread rubber to peeling off from the base tire.

### BRIEF DESCRIPTION OF THE DRAWINGS

FIG. 1 is a lateral cross-sectional view of a retreaded tire according to an embodiment of the present invention.
FIG. 2 is a development view showing a ground contacting surface of a tread rubber of FIG. 1.
FIG. 3 is an enlarged perspective view showing a groove surface of a first shoulder circumferential groove of FIG. 1.
FIG. 4 is an enlarged development view of the groove surface of the first shoulder circumferential groove of FIG. 3.
FIG. 5 is a cross-sectional view of a dimple.
FIG. 6 is a cross-sectional view taken along A-A line of FIG. 2.

### DETAILED DESCRIPTION OF THE INVENTION

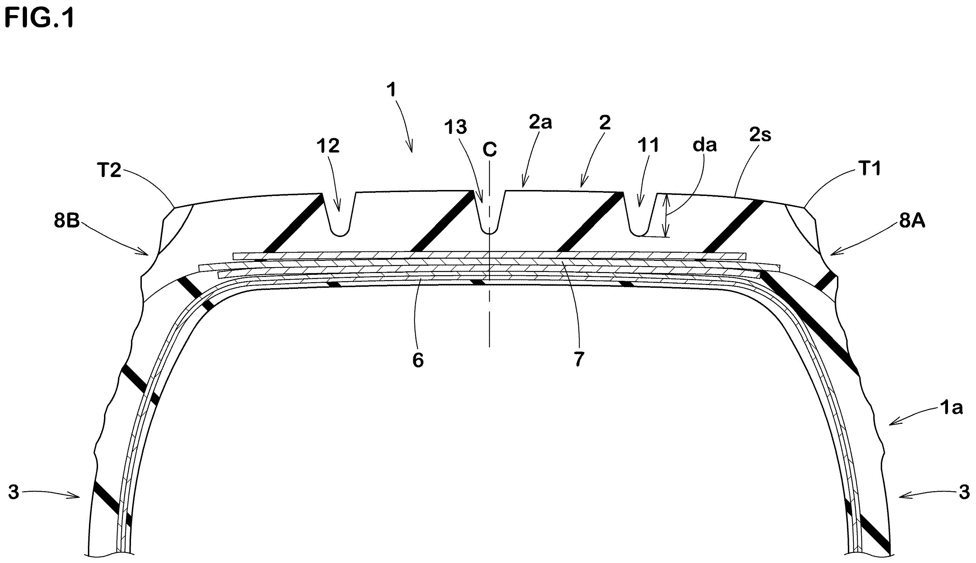

An embodiment of the present invention will now be described in conjunction with accompanying drawings. FIG. 1 is a lateral cross-sectional view of a retreaded tire 1 (hereinafter may be simply referred to as "tire 1") showing an embodiment of the present invention. FIG. 1 is the lateral cross-sectional view of the tire 1 in a standard state passing all through a tire rotational axis. As shown in FIG. 1, the tire 1 of the present embodiment includes a base tire (1a), which is obtained by removing a tread rubber from a used tire, and a tread rubber (2a) for retread. This tread rubber (2a) is adhered to the base tire (1a). In FIG. 1, bead portions of the base tire (1a) are omitted. The tire 1 of the present embodiment is suitable for use as a pneumatic tire for light or medium trucks, for example, but the present invention is not limited to such a mode.

In the case of pneumatic tires for which various standards have been established, the term "standard state" refers to a state in which the tire 1 is mounted on a standard rim, inflated to a standard inner pressure, and loaded with no tire load. In the case of tires for which various standards are not established, the standard sate means a state of standard usage according to the purpose of use of the tire and a state in which the tire is not mounted on a vehicle and is loaded with no tire load. In the present specification, unless otherwise noted, dimensions and the like of various parts of the tire are the values measured in the standard sate.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The tire 1 includes a tread portion 2 including the tread rubber (2a), a pair of sidewall portions 3, and a pair of the bead portions (not shown). The sidewall portions 3 are each connected to the tread portion 2 on a respective outer side in a tire axial direction and extend in a tire radial direction. The bead portions are each connected to a respective one of the sidewall portions 3 on an inner side in the tire radial direction. Further, although the tire 1 is provided with known configurations such as a carcass 6, a tread reinforcing layer 7, and the like, descriptions thereof will be omitted here.

The tread rubber (2a) includes a first tread edge T1 and a second tread edge T2. The first tread edge T1 and the second tread edge T2 correspond to axially outermost ground contact positions when the tire 1 in the standard state is in contact with a flat surface with zero camber angle by being loaded with 90% of a standard tire load. Thereby, the tread rubber (2a) includes a ground contacting surface (2s), a first buttress surface 8A, and a second buttress surface 8B. The ground contacting surface (2s) is the surface that contacts the road surface when the tire is running and extends axially inward from the first tread edge T1 and the second tread edge T2. The first buttress surface 8A extends axially inward from the first tread edge T1. The second buttress surface 8B extends axially inward from the second tread edge T2.

In the case of pneumatic tires for which various standards have been established, the "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. Further, in the case of tires for which various standards are not established, the "standard tire load" refers to the maximum load applicable to the use of the tire in accordance with the above-mentioned standards.

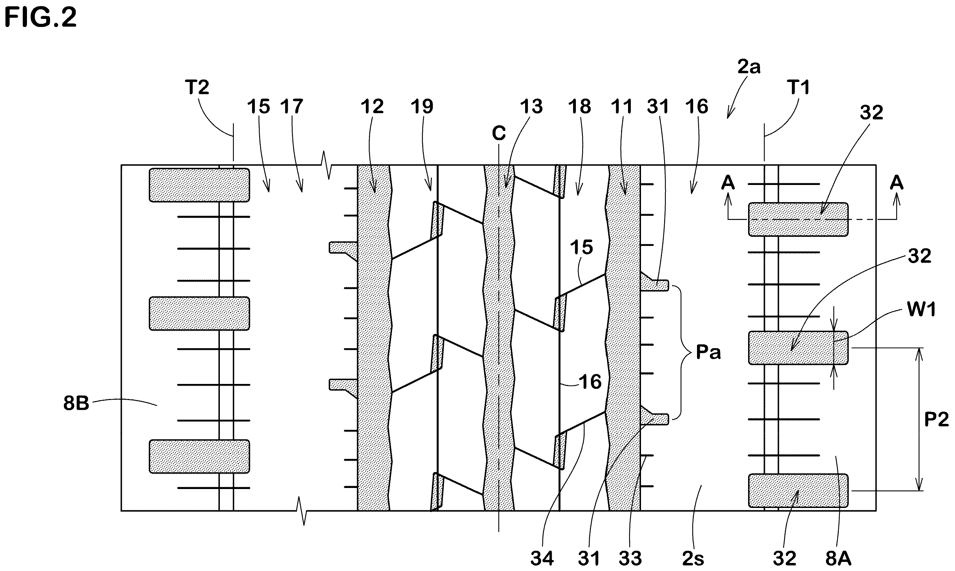

FIG. 2 is a development view showing the ground contacting surface (2s) of the tread rubber (2a). Various grooves are shaded by small dots in FIG. 2. As shown in FIG. 2, the tread rubber (2a) includes a first shoulder circumferential groove 11 adjacent to the first tread edge T1 and extending continuously in a tire circumferential direction. The tread rubber (2a) of the present embodiment includes a second shoulder circumferential groove 12 and a crown circumferential groove 13 extending continuously in the tire circumferential direction. The second shoulder circumferential groove 12 is adjacent to the second tread edge T2. The crown circumferential groove 13 is provided between the first shoulder circumferential groove 11 and the second shoulder circumferential groove 12, and is located on a tire equator (C) in the present embodiment. Each of the circumferential grooves has a groove width in the range from 5 to 15 mm, for example. Further, each of the circumferential grooves has a depth in the range from 5 to 15 mm, for example.

The tread rubber (2a) of the present embodiment includes a plurality of land regions 15. The land regions 15 includes a first shoulder land region 16, a second shoulder land region 17, a first crown land region 18, and a second crown land region 19. The first shoulder land region 16 is demarcated axially outside the first shoulder circumferential groove 11 and includes the first tread edge T1. The second shoulder land region 17 is demarcated axially outside the second shoulder circumferential groove 12 and includes the second tread edge T2. The first crown land region 18 is demarcated between the first shoulder circumferential groove 11 and the crown circumferential groove 13. The second crown land region 19 is demarcated between the second shoulder circumferential groove 12 and the crown circumferential groove 13. The tread rubber (2a) of the present embodiment is composed of these four land regions 15 but is not limited to such a manner.

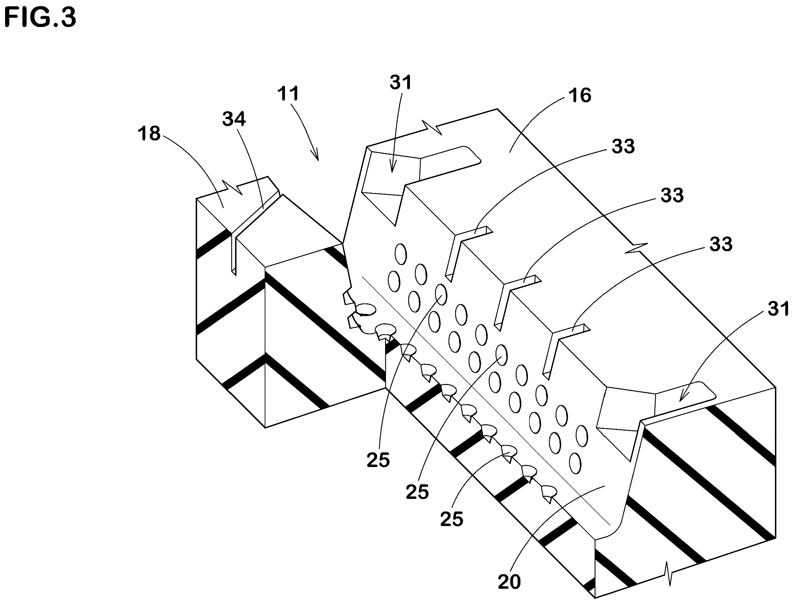

FIG. 3 shows an enlarged perspective view showing a groove surface 20 of the first shoulder circumferential groove 11. As shown in FIG. 3, the groove surface 20 of the first shoulder circumferential groove 11 is provided with a plurality of dimples 25. This improves the peeling resistance of the tread rubber (2a) to peeling off from the base tire (1a) (shown in FIG. 1, and the same applies hereinafter). The reason for this is as follows. It should be noted that the dimples 25 are omitted in FIGs. 1 and 2.

Generally speaking, adhesion between the base tire and the tread rubber is low in retreaded tires. Therefore, the heat generated in the tread rubber during running tends to cause damage such as the tread rubber peeling off from the base tire. In particular, heat generation during running tends to occur at the shoulder portions, where the movement of the tread reinforcing layer is greater, thereby, it is important to reduce the heat generation at the shoulder portions of the tread rubber.

In contrast, in the present invention, heat dissipation around the first shoulder circumferential groove 11 is enhanced by a plurality of the dimples 25 on the groove surface of the first shoulder circumferential groove 11, therefore, it is possible that the peeling resistance of the tread rubber (2a) to peeling off from the base tire (1a) (hereinafter may be simply referred to as "peeling resistance") is effectively improved.

Further, in an embodiment in which the tread rubber (2a) is adhered to the base tire (1a) by vulcanization and the dimples 25 mentioned above are formed by the mold during this vulcanization, since the dimples 25 are provided, heat from the mold is easily transferred to the contact area between the tread rubber (2a) and the base tire (1a). Thereby, that the vulcanization process time can be shortened. Further, the dimples 25 described above also help to create turbulence in the grooves and reduce noise caused by the first shoulder circumferential groove 11 during running. Furthermore, the dimples 25 described above can also be expected to have the effect of preventing foreign objects such as stones from getting caught in the first shoulder circumferential groove 11.

Further detailed configurations of the present embodiment will be described below. It should be noted that each of the configurations described below indicates a specific aspect of the present embodiment. Therefore, it goes without saying that the present invention can exert the effects described above even if it does not have the configurations described below. Further, even if any one of the configurations described below is applied alone to the tire of the present invention having the features described above, performance improvement can be expected in accordance with each configuration. Furthermore, when some of the configurations described below are applied in combination, a combined performance improvement can be expected according to each configuration.

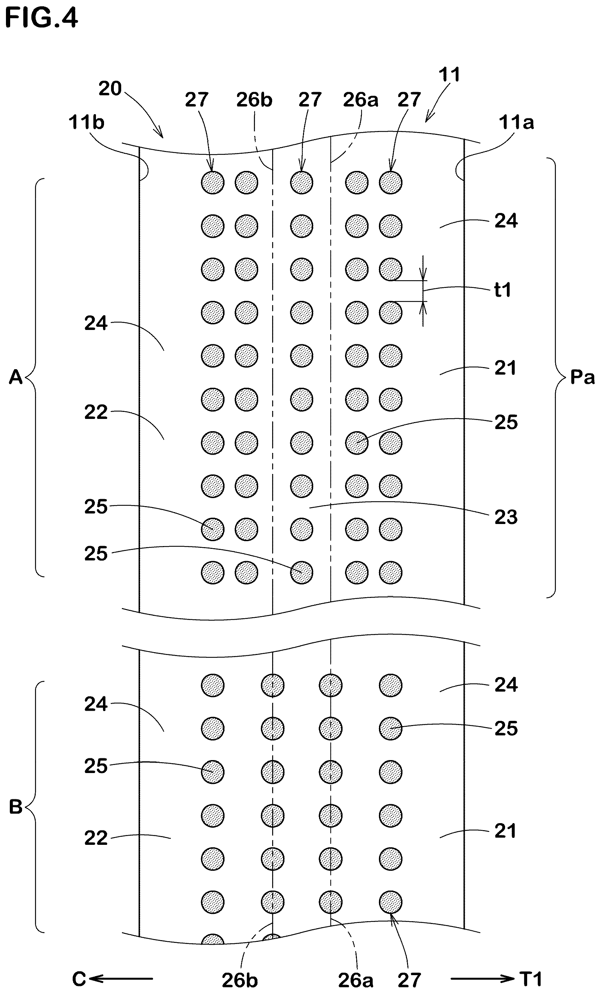

FIG. 4 is an enlarged development view conceptually illustrating the groove surface 20 of the first shoulder circumferential groove 11. In FIG. 4, a first groove edge (11a) and a second groove edge (11b) of the first shoulder circumferential groove 11 are shown by solid lines. The first groove edge (11a) is the groove edge on the first tread edge T1 side. The second groove edge (11b) is the groove edge on the tire equator (C) side. For ease of understanding the features of the present invention, the grooves and sipes (first shoulder lateral grooves 31, shoulder sipes 33, and crown sipes 34 shown in FIG. 3) that are connected to these groove edges and extend in the tire axial direction are omitted in FIG. 4. Further, fine ridge lines and the like formed on the groove surface 20 are also omitted. As shown in FIG. 4, the groove surface 20 includes a pair of groove wall surfaces 24 and a groove bottom surface 23 between them. The pair of the groove wall surfaces 24 consists of a first groove wall surface 21 on the first tread edge T1 side and a second groove wall surface 22 on the tire equator (C) side. In FIG. 4, a boundary (26a) between the first groove wall surface 21 and the groove bottom surface 23 and a boundary (26b) between the second groove wall surface 22 and the groove bottom surface 23 are shown by two-dot chain lines.

As shown in FIG. 3 and in a region (A) (first region) of FIG. 4, the multiple dimples 25 are provided on at least one of the pair of the groove wall surfaces 24, specifically, the multiple dimples 25 are provided at least on the first groove wall surface 21. In the present embodiment, a plurality of the dimples 25 is also provided on the second groove wall surface 22, and in a more preferred embodiment, a plurality of the dimples 25 are also provided on the groove bottom surface 23. Thereby, the above-mentioned effects are reliably exerted. However, the present invention is not limited to such a manner. That is, the present invention can include an embodiment in which a plurality of the dimples 25 is provided only on the second groove wall surface 22, or an embodiment in which a plurality of the dimples 25 is provided only on the groove bottom surface 23.

In another embodiment, at least one of the dimples 25 may be formed over the groove bottom surface 23 and one of the pair of the groove bottom surfaces 23 so as to cross the boundary (26a) or (26b), as in the arrangement shown in a region (B) (second region) in FIG. 4. In such an embodiment, the heat dissipation near the boundaries (26a) and (26b) can be further increased, therefore, it is possible that the peeling resistance is further improved. It should be noted that, in the present invention, one first shoulder circumferential groove 11 may include the arrangement shown in the region (A) and the arrangement shown in the region (B) in FIG. 4. This makes it possible to obtain the above-described effects while maintaining steering stability on a dry road surface (hereinafter may be simply referred to as "steering stability").

As shown in FIG. 2, the first shoulder circumferential groove 11 is connected with a plurality of the first shoulder lateral grooves 31 arranged in the tire circumferential direction and each extending from the first shoulder circumferential groove 11 in the tire axial direction on the ground contacting surface (2s) of the tread rubber (2a). Thereby, a 1-pitch area (Pa) is formed between two adjacent first shoulder lateral grooves 31 (between the groove center lines) in each pair of the first shoulder lateral grooves 31 adjacent to each other. As shown in FIG. 4, in each 1-pitch area (Pa), the groove surface 20 has one or more rows each having preferably two or more dimples 25 arranged in the tire circumferential direction (vertical direction in FIG. 4), and more preferably 5 or more, even more preferably 8 or more, and preferably 20 or less, more preferably 15 or less, still more preferably 12 or less dimples 25 arranged in the tire circumferential direction. Thereby, the above-mentioned effects can be obtained while maintaining the rigidity around the first shoulder circumferential groove 11. Therefore, the steering stability and the peeling resistance are improved in a good balance.

From a similar point of view, it is preferred that one of the groove wall surfaces 24 (each of the groove wall surfaces 24 in the present embodiment) included in one 1-pitch area (Pa) has one or more rows each having 1 to 5 dimples 25 arranged in the tire radial direction (lateral direction on the groove wall surfaces 24 in FIG. 4). In other words, it is preferred that one (or each) of the groove wall surfaces 24 has one or more rows each having 1 to 5 dimples 25 arranged in the tire radial direction in each 1-pitch area (Pa). As a result, 1 to 5 dimple rows 27 in which a plurality of the dimples 25 are arranged in the tire circumferential direction are arranged on one groove wall surface 24. In the present embodiment, one groove wall surface 24 has two dimple rows 27 arranged therein. However, the present invention is not limited to such a mode.

The groove bottom surface 23 has a single row of the dimple row 27 in which multiple dimples 25 are arranged in the tire circumferential direction. A plurality of the dimple rows 27 may be arranged on the groove bottom surface 23.

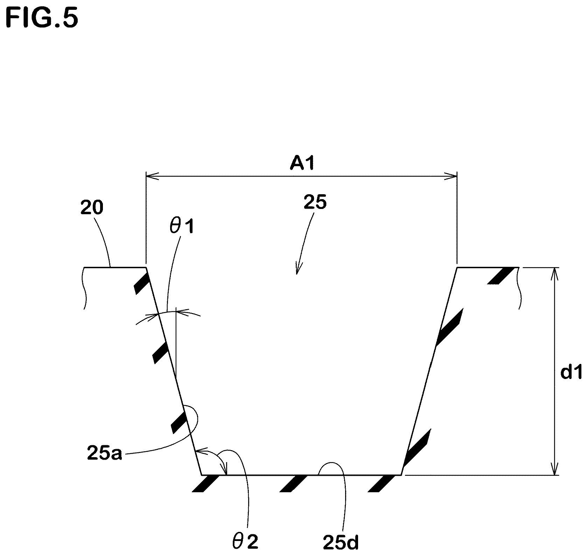

FIG. 5 shows a cross-sectional view of one of the dimples 25. As shown in FIGs. 3 to 5, each of the dimples 25 has a circular opening, for example. Further, each of the dimples 25 extends in a depth direction thereof while maintaining this opening shape. Thereby, each of the dimples 25 has an inner space having a cylindrical or a truncated cone shape. However, the present invention is not limited to such an embodiment, and the opening shape of each of the dimples 25 may be an ellipse, a triangle, a rectangle, or the like, for example.

As shown in FIG. 5, in the present invention, each of the dimples 25 has a maximum diameter A1 of 1 to 5 mm, preferably 2.5 to 4.5 mm. Further, each of the dimples 25 has a maximum depth (d1) of 1 to 3 mm. Therefore, the steering stability and the peeling resistance are improved in a good balance.

Each of the dimples 25 includes a concave conical portion having a taper angle θ1. The taper angle θ1 is 60 degrees or less, for example, preferably 10 to 30 degrees. It should be noted that the taper angle θ1 is the angle of an inner wall (25a) with respect to the depth direction of each of the dimples 25. Owing to the above taper angle θ1, it is possible that a large volume of each of the dimples 25 is ensured while suppressing cracking of the rubber around the dimples 25.

An angle θ2 between a bottom surface (25d) and the inner wall (25a) is in the range of from 90 to 120 degrees in each of the dimples 25, for example. The dimples 25 configured as such exert excellent heat dissipation at the bottom surfaces (25d), therefore, the peeling resistance is further improved.

As shown in FIG. 4, it is preferred that the dimples 25 are arranged at an interval (t1) of 2 mm or more and 5 mm or less from each other. Thereby, it is possible that the heat dissipation of the groove surface 20 of the first shoulder circumferential groove 11 is increased while the durability thereof is maintained. It should be noted the above interval (t1) corresponds to a distance between the edges of two dimples 25 adjacent immediately to each other. The interval (t1) shown in FIG. 4 indicates the distance between two dimples 25 in the tire circumferential direction, but the above numerical range also applies to the distance in the tire radial direction between two dimples 25 aligned in the tire radial direction.

As shown in FIG. 2, the tread rubber (2a) is provided with a plurality of second shoulder lateral grooves 32 opening at the ground contacting surface (2s) and the first buttress surface 8A. Each of the second shoulder lateral grooves 32 in the present embodiment extends with a constant groove width. On the first buttress surface 8A, a groove width W1 of each of the second shoulder lateral grooves 32 is 50% or less of a 1-pitch length P2 between each two of the multiple second shoulder lateral grooves 32 adjacent to each other. In a preferred embodiment, the groove width W1 is in the range from 15% to 30% of the 1-pitch length P2. Therefore, the durability near the first tread edge T1 is improved

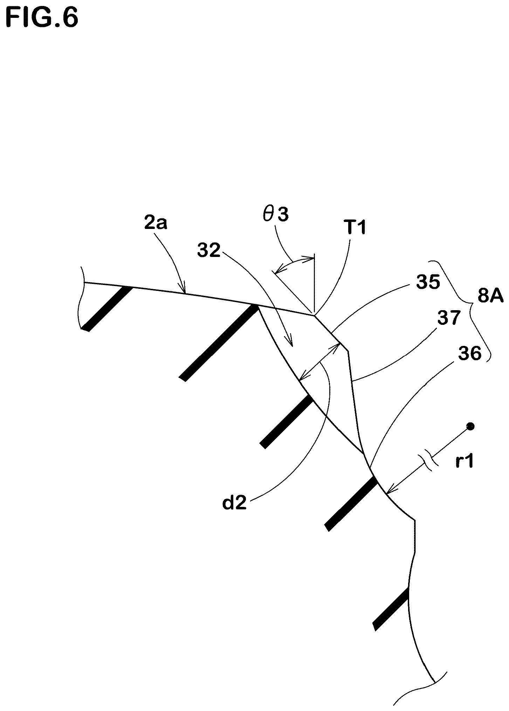

FIG. 6 shows a cross-sectional view taken along A-A line of FIG. 2. As shown in FIG. 6, a maximum depth (d2) of each of the second shoulder lateral grooves 32 is 50% or less of a maximum depth (da) (shown in FIG. 1 and is the maximum depth not including the dimples 25) of the first shoulder circumferential groove 11. Thereby, the durability near the first tread edge T1 is further improved.

In the cross section of the tread rubber (2a) passing all through the tire rotational axis, the first buttress surface 8A includes an inclined surface 35 extending from the first tread edge T1 and a concave arc surface 36 arranged radially inside the inclined surface 35. A plane 37 is formed between the inclined surface 35 and the concave arc surface 36.

The inclined surface 35 is a plane that slopes axially outward and radially inward from the first tread edge T1. The inclined surface 35 has an angle θ3 in the range from 40 to 50 degrees with respect to the tire radial direction, for example. Thereby, it is possible that uneven wear around the first tread edge T1 is suppressed.

The concave arc surface 36 is concave toward the tire equator (C) (shown in FIG. 1) and is curved in an arc shape in a cross section thereof. It is possible that the concave arc surface 36 configured as such effectively suppresses heat generation of the first buttress surface 8A. From the point of view of improving the durability and the peeling resistance of the first buttress surface 8A in a good balance, it is preferred that a radius of curvature (r1) of the concave arc surface 36 is in the range from 20 to 120 mm.

As shown in FIG. 1, in the tire 1 of the present embodiment, the configuration on the first tread edge T1 side from the tire equator (C) and the configuration on the second tread edge T2 side from the tire equator (C) are substantially the same. That is, the configuration of the first shoulder circumferential groove 11 described above can be applied to the second shoulder circumferential groove 12. Further, the configuration of the first buttress surface 8A can be applied to the second buttress surface 8B on the opposite side.

The retreaded tire 1 of the present invention can be manufactured by various manufacturing methods. The tire 1 of the present invention may be manufactured by attaching the tread rubber (2a) made of unvulcanized rubber to the base tire (1a) and integrating them by vulcanization molding, for example. In this case, it is preferred that the dimples 25 (shown in FIGs. 3 to 5) are formed by the mold used during the above-mentioned vulcanization molding. In another manufacturing method, the tire 1 of the present invention may be manufactured by, for example, adhering a vulcanized tread rubber (2a) on which the above-mentioned dimples 25 are arranged to the base tire (1a), or after the vulcanized tread rubber (2a) without the dimples 25 is adhered to the base tire (1a), the dimples 25 may be formed on the tread rubber (2a).

While detailed description has been made of the tire according to an embodiment of the present invention, the present invention can be embodied in various forms without being limited to the illustrated embodiment.

### [ Examples ]

Retreaded tires of size 205/85R16 having the basic structure shown in FIGs. 1 to 6 were made by way of test according to the specifications listed in Table 1. As Reference, tires not provided with the dimples on the first shoulder circumferential groove were made by way of test. The tires in the Reference were substantially the same as the tires in Examples except for the above-mentioned items. Each of the test tires was tested for the peeling resistance and other damage. The common specifications and test methods for each test tire are as follows.
Tire rim: 16x5.5J
Tire inner pressure: 600 kPa

### < Peeling Resistance >

Each of the test tires was placed on a drum testing machine and kept running at a speed of 80 km/h with a vertical load of 16.79 kN, and then the running distance when the retreaded tread peeled off from the base tire was measured. The results are indicated by an index based on the running distance of the Reference being 100, wherein the larger the numerical value, the better the peeling resistance is.

The test results are shown in Table 1.

**Table 1**

| | | Ref. | Ex. 1 | Ex. 2 | Ex. 3 |
|---|---|---|---|---|---|
| Presence (P) or Absence (A) of Dimples in First shoulder circumferential groove | | A | P | P | P |
| Maximum diameter A1 of Dimple | [mm] | - | 2.5 | 0.5 | 0.5 |
| Maximum depth (d1) of Dimple | [mm] | - | 2.5 | 0.5 | 0.5 |
| Taper angle θ1 of Dimple | [degree] | - | 30 | 10 | 10 |
| Interval (t1) between Dimples | [mm] | - | 2.5 | 0.5 | 2.5 |
| Number of Dimples in a radial row on one Groove wall surface in 1-pitch area | | - | 2 | 7 | 2 |
| Number of Dimples in a circumferential row on one Groove wall surface in 1-pitch area | | - | 10 | 1 | 10 |
| Peeling resistance | [index] | 100 | 120 | 110 | 110 |

As shown in Table 1, from the test results, it was confirmed that the tires in the Examples exerted excellent peeling resistance.

### [ Description of Reference Signs ]

- 1a: base tire
- 2a: tread rubber
- 11: first shoulder circumferential groove
- 20: groove surface
- 25: dimple
- T1: first tread edge

## Claims

1. A retreaded tire comprising:
a base tire (1a); and
a tread rubber (2a) for retread adhered to the base tire (1a),
wherein the tread rubber (2a) includes a first tread edge (T1) and a first shoulder circumferential groove (11) adjacent to the first tread edge (T1) and extending continuously in a tire circumferential direction, and
the first shoulder circumferential groove (11) has a groove surface (20) provided with a plurality of dimples (25),
the first shoulder circumferential groove (11) is connected with a plurality of first shoulder lateral grooves (31) arranged in the tire circumferential direction and each extending in a tire axial direction on a ground contacting surface (2s) of the tread rubber (2a), and
in a 1-pitch area (Pa) between two first shoulder lateral grooves (31) adjacent to each other, the groove surface (20) of the first shoulder circumferential groove (11) is provided with one or more rows each having 2 to 20 dimples (25) arranged in the tire circumferential direction,
the tread rubber (2a) includes the ground contacting surface (2s) extending axially inward from the first tread edge (T1) and a first buttress surface (8A) extending inward in a tire radial direction from the first tread edge (T1),
the tread rubber (2a) is provided with a plurality of second shoulder lateral grooves (32) each opening at the ground contacting surface (2s) and the first buttress surface (8A), and
on the first buttress surface (8A), each of the second shoulder lateral grooves (32) has a groove width (W1) of 50% or less of a 1-pitch length (P2) between two second shoulder lateral grooves (32) adjacent to each other,
**characterized in that**
wherein each of the second shoulder lateral grooves (32) has a maximum depth (d2) of 50% or less of a maximum depth (da) of the first shoulder circumferential groove (11).

2. The retreaded tire according to claim 1, wherein
the groove surface (20) includes a pair of groove wall surfaces (24), and
at least one of the groove wall surfaces (24) is provided with the dimples (25).

3. The retreaded tire according to claim 1 or 2, wherein
the groove surface (20) includes a groove bottom surface (23), and
the groove bottom surface (23) is provided with the dimples (25).

4. The retreaded tire according to any one of claims 1 to 3, wherein
the groove surface (20) includes a pair of groove wall surfaces (24) and a groove bottom surface (23), and
at least one of the dimples (25) is formed over the groove bottom surface (23) and one of the groove wall surfaces (24).

5. The retreaded tire according to any one of claims 1 to 4, wherein each of the dimples (25) has a concave conical portion having a taper angle (θ1) of 60 degrees or less with respect to a depth direction of the each of the dimples (25).

6. The retreaded tire according to any one of claims 1 to 5, wherein the dimples (25) are arranged at an interval (t1) from 2 to 5 mm.

7. The retreaded tire according to any one of claims 1 to 6, wherein
the groove surface (20) includes a first groove wall surface (21) on the first tread edge side (T1), and
the first groove wall surface (21) is provided with the dimples (25).

8. The retreaded tire according to any one of claims 1 to 7, wherein
the groove surface (20) includes a pair of groove wall surfaces (24), and
in the 1-pitch area (Pa), one of the groove wall surfaces (24) is provided with one or more rows each having 1 to 5 dimples (25) arranged in a tire radial direction.

9. The retreaded tire according to any one of claims 1 to 8, wherein the first buttress surface (8A) includes a concave arc surface (36) concave toward a tire equator (C) in a lateral cross section of the tread rubber (2a) passing through a tire rotational axis.

10. The retreaded tire according to claim 9, wherein the concave arc surface (36) has a radius of curvature (r1) of 20 mm or more and 120 mm or less in the lateral cross section.

## Patentansprüche

1. Runderneuerter Reifen, umfassend:
einen Basisreifen (1a) und
einen Laufflächengummi (2a) zum Runderneuern, der an dem Basisreifen (1a) haftet,
wobei der Laufflächengummi (2a) eine erste Laufflächenkante (T1) und eine erste Schulterumfangsrille (11) umfasst, die benachbart zu der ersten Laufflächenkante (T1) ist und sich kontinuierlich in einer Reifenumfangsrichtung erstreckt, und
die erste Schulterumfangsrille (11) eine Rillenfläche (20) aufweist, die mit einer Vielzahl von Vertiefungen (25) versehen ist,
die erste Schulterumfangsrille (11) mit einer Vielzahl von ersten Schulterquerrillen (31) verbunden ist, die in der Reifenumfangsrichtung angeordnet sind und sich jeweils in einer Reifenaxialrichtung an einer Bodenkontaktfläche (2s) des Laufflächengummis (2a) erstrecken, und
in einem 1-Teilungsbereich (Pa) zwischen zwei ersten Schulterquerrillen (31), die benachbart zueinander sind, die Rillenfläche (20) der ersten Schulterumfangsrille (11) mit einer oder mehreren Reihen versehen ist, die jeweils 2 bis 20 Vertiefungen (25) aufweisen, die in der Reifenumfangsrichtung angeordnet sind,
der Laufflächengummi (2a) die Bodenkontaktfläche (2s), die sich von der ersten Laufflächenkante (T1) axial nach innen erstreckt, und eine erste Stützfläche (8A) umfasst, die sich von der ersten Laufflächenkante (T1) in einer Reifenradialrichtung nach innen erstreckt,
der Laufflächengummi (2a) mit einer Vielzahl von zweiten Schulterquerrillen (32) versehen ist, die sich jeweils an der Bodenkontaktfläche (2s) und der ersten Stützfläche (8A) öffnen, und
auf der ersten Stützfläche (8A) jede der zweiten Schulterquerrillen (32) eine Rillenbreite (W1) von 50 % oder weniger einer 1-Teilungslänge (P2) zwischen zwei zweiten Schulterquerrillen (32) aufweist, die benachbart zueinander sind,
**dadurch gekennzeichnet, dass**
jede der zweiten Schulterquerrillen (32) eine maximale Tiefe (d2) von 50 % oder weniger einer maximalen Tiefe (da) der ersten Schulterumfangsrille (11) aufweist.

2. Runderneuerter Reifen nach Anspruch 1, wobei
die Rillenfläche (20) ein Paar Rillenwandflächen (24) umfasst, und
mindestens eine der Rillenwandflächen (24) mit den Vertiefungen (25) versehen ist.

3. Runderneuerter Reifen nach Anspruch 1 oder 2, wobei
die Rillenfläche (20) eine Rillenbodenfläche (23) umfasst, und
die Rillenbodenfläche (23) mit den Vertiefungen (25) versehen ist.

4. Runderneuerter Reifen nach einem der Ansprüche 1 bis 3, wobei
die Rillenfläche (20) ein Paar Rillenwandflächen (24) und eine Rillenbodenfläche (23) umfasst, und
mindestens eine der Vertiefungen (25) über der Rillenbodenfläche (23) und einer der Rillenwandflächen (24) ausgebildet ist.

5. Runderneuerter Reifen nach einem der Ansprüche 1 bis 4, wobei jede der Vertiefungen (25) einen konkaven konischen Abschnitt mit einem Kegelwinkel (θ1) von 60 Grad oder weniger in Bezug auf eine Tiefenrichtung jeder der Vertiefungen (25) aufweist.

6. Runderneuerter Reifen nach einem der Ansprüche 1 bis 5, wobei die Vertiefungen (25) in einem Abstand (t1) von 2 bis 5 mm angeordnet sind.

7. Runderneuerter Reifen nach einem der Ansprüche 1 bis 6, wobei
die Rillenfläche (20) eine erste Rillenwandfläche (21) auf der Seite der ersten Laufflächenkante (T1) umfasst, und
die erste Rillenwandfläche (21) mit den Vertiefungen (25) versehen ist.

8. Runderneuerter Reifen nach einem der Ansprüche 1 bis 7, wobei
die Rillenfläche (20) ein Paar Rillenwandflächen (24) umfasst, und
in dem 1-Teilungsbereich (Pa) eine der Rillenwandflächen (24) mit einer oder mehreren Reihen versehen ist, die jeweils 1 bis 5 Vertiefungen (25) aufweisen, die in einer Reifenradialrichtung angeordnet sind.

9. Runderneuerter Reifen nach einem der Ansprüche 1 bis 8, wobei die erste Stützfläche (8A) eine konkave Bogenfläche (36) umfasst, die in einem Querquerschnitt des Laufflächengummis (2a), der durch eine Reifendrehachse verläuft, zu einem Reifenäquator (C) hin konkav ist.

10. Runderneuerter Reifen nach Anspruch 9, wobei die konkave Bogenfläche (36) einen Krümmungsradius (r1) von 20 mm oder mehr und 120 mm oder weniger im Lateralquerschnitt aufweist.

## Revendications

1. Pneumatique rechapé comprenant :
un pneumatique de base (1a) ; et
un caoutchouc de bande de roulement (2a) pour une rechape, appliqué par adhérence sur le pneumatique de base (a1),
dans lequel le caoutchouc de bande de roulement (2a) inclut un premier bord de bande de roulement (T1) et une première rainure circonférentielle d'épaulement (11) adjacente au premier bord de bande de roulement (T1) et s'étendant en continu dans une direction circonférentielle du pneumatique, et
la première rainure circonférentielle d'épaulement (11) a une surface de rainure (20) pourvue d'une pluralité d'alvéoles (25),
la première rainure circonférentielle d'épaulement (11) est connectée à une pluralité de premières rainures latérales d'épaulement (31) agencées dans la direction circonférentielle du pneumatique et s'étendant chacune dans une direction axiale du pneumatique sur une surface de contact au sol (2s) du caoutchouc de bande de roulement (2a), et
dans une zone de 1 pas (Pa) entre deux premières rainures latérales d'épaulement (31) adjacentes l'une à l'autre, la surface de rainure (20) de la première rainure circonférentielle d'épaulement (11) est pourvue d'une ou de plusieurs rangées ayant chacune de 2 à 20 alvéoles (25) agencées dans la direction circonférentielle du pneumatique,
le caoutchouc de bande de roulement (2a) inclut la surface de contact au sol (2s) s'étendant axialement vers l'intérieur depuis le premier bord de bande de roulement (T1) et une première surface de contrefort (8A) s'étendant vers l'intérieur dans une direction radiale du pneumatique depuis le premier bord de bande de roulement (T1),
le caoutchouc de bande de roulement (2a) est pourvu d'une pluralité de secondes rainures latérales d'épaulement (32) s'ouvrant chacune au niveau de la surface de contact au sol (2s) et de la première surface de contrefort (8A), et
sur la première surface de contrefort (8A), chacune des secondes rainures latérales d'épaulement (32) a une largeur de rainure (W1) de 50 % au moins d'une longueur de 1 pas (P2) entre deux secondes rainures latérales d'épaulement (32) adjacentes l'une à l'autre,
**caractérisé en ce que**
dans lequel chacune des secondes rainures latérales d'épaulement (32) a une profondeur maximum (d2) de 50 % ou moins d'une profondeur maximum (da) de la première rainure circonférentielle d'épaulement (11).

2. Pneumatique rechapé selon la revendication 1, dans lequel
la surface de rainure (20) inclut une paire de surfaces de paroi de rainure (24), et
l'une au moins des surfaces de paroi de rainure (24) est pourvue des alvéoles (25).

3. Pneumatique rechapé selon la revendication 1 ou 2, dans lequel
la surface de rainure (20) inclut une surface de fond de rainure (23), et
la surface de fond de rainure (23) est pourvue des alvéoles (25).

4. Pneumatique rechapé selon l'une quelconque des revendications 1 à 3, dans lequel
la surface de rainure (20) inclut une paire de surfaces de paroi de rainure (24) et une surface de paroi de rainure (23), et
l'une au moins des alvéoles (25) est formée sur la surface de fond de rainure (23) et l'une des surfaces de paroi de rainure (24).

5. Pneumatique rechapé selon l'une quelconque des revendications 1 à 4, dans lequel chacune des alvéoles (25) a une portion conique concave ayant un angle incliné (θ1) de 60 degrés ou moins par rapport à une direction de la profondeur de chacune des alvéoles (25).

6. Pneumatique rechapé selon l'une quelconque des revendications 1 à 5, dans lequel les alvéoles (25) sont agencées à un intervalle (t1) allant de 2 à 5 mm.

7. Pneumatique rechapé selon l'une quelconque des revendications 1 à 6, dans lequel
la surface de rainure (20) inclut une première surface de paroi de rainure (21) sur le premier côté du bord de bande de roulement (T1), et
la première surface de paroi de rainure (21) est pourvue des alvéoles (25).

8. Pneumatique rechapé selon l'une quelconque des revendications 1 à 7, dans lequel
la surface de rainure (20) inclut une paire de surfaces de paroi de rainure (24), et
dans la zone de 1 pas (Pa), l'une des surfaces de paroi de rainure (24) est pourvue d'une ou de plusieurs rangées ayant chacune 1 à 5 alvéoles (25) agencées dans une direction radiale du pneumatique.

9. Pneumatique rechapé selon l'une quelconque des revendications 1 à 8, dans lequel la première surface de contrefort (8A) inclut une surface arquée concave (36) qui est concave vers un équateur de pneumatique (C) dans une section transversale latérale du caoutchouc de bande de roulement (2a) passant à travers un axe de rotation du pneumatique.

10. Pneumatique rechapé selon la revendication 9, dans lequel la surface arquée concave (36) a un rayon de courbure (r1) de 20 mm ou plus et de 120 mm ou moins dans la section transversale latérale.
